# EUROPEAN PATENT SPECIFICATION

(11) **EP 2 651 829 B1**
(45) Date of publication and mention of the grant of the patent: **24.06.2015**
(21) Application number: 11799405.3
(22) Date of filing: 13.12.2011
(51) Int. Cl.: C02F 1/00, B01D 35/30, A47J 31/60

(54) **APPARATUS FOR TREATING A LIQUID**
VORRICHTUNG ZUR BEHANDLUNG EINER FLÜSSIGKEIT
APPAREIL CONÇU POUR TRAITER UN LIQUIDE

(30) Priority: 14.12.2010 DE 102010063088
(43) Date of publication of application: 23.10.2013
(73) Proprietor: Brita GmbH, 65232 Taunusstein (DE)
(72) Inventor: TASZAREK, Josef, 65232 Taunusstein (DE)
(74) Representative: Meissner, Bolte & Partner GbR
(86) International application number: PCT/EP2011/072616
(87) International publication number: WO 2012/080254

(56) References cited:
- EP-A1- 1 576 997
- DE-A1- 19 915 829
- DE-B3-102004 026 166
- GB-A- 2 346 568
- US-A1- 2005 103 697
- US-A1- 2006 169 629
- US-A1- 2007 246 421
- US-A1- 2010 000 919

## Description

The invention relates to an apparatus for treating a liquid, including:
a receptacle for collecting the liquid to be treated, the receptacle including a first locking device and a drain opening for dispensing the liquid to be treated, and having a first axis; and
a cartridge for treating the liquid, releasably attachable to the receptacle, the cartridge having a second axis and including a second locking device and an inlet opening for leading the liquid to be treated into the cartridge.

The invention also relates to a receptacle and a cartridge for such an apparatus.

The invention also relates to a method of releasably attaching a cartridge for treating a liquid to a receptacle for collecting the liquid to be treated.

Such apparatuses are used to treat, for example, drinking water, to which end the cartridges include treatment means with which the water can be treated and conditioned. These treatment means may include e.g. ion exchanger materials and/or activated carbon materials, with which the water is chemically and/or physically treated. The treatment means have only a limited capacity, however, so that the cartridges must be replaced at regular intervals, in order to guarantee effective treatment of the water.

In gravity-driven apparatuses for treating water, the cartridges are often inserted in an opening in a bottom wall of a receptacle. The water can be filled into the receptacle and collected there before it flows into the cartridge and is treated. To guarantee that all the water filled into the receptacle is treated, the cartridge must be inserted into the bottom wall of the receptacle in a liquid-tight manner. When the cartridge is replaced, it frequently happens that the new cartridge is not inserted into the bottom wall of the receptacle correctly, and thus not in a liquid-tight manner, as a result of which only a portion of the liquid filled into the receptacle is treated. A liquid-tight seal is to be understood in the present context as a seal that for the most part prevents passage of the liquid through the seal that is used, so that the application concerned can be carried out as desired. Complete sealing need not necessarily be aspired to. A certain degree of permeability to the liquid may be acceptable, depending on the application.

GB 2 346 568 A discloses a device for preparing liquid comprising an inlet funnel and a filter cartridge that is sealed to the inlet funnel by means of a sealing element, a filter cartridge main part containing a treatment medium. The sealing element has a smaller radial dimension than the largest radial dimension of the cartridge. The filter cartridge may have an upper part with inlet apertures that may be moved into sealing engagement with a sealing seat of the inlet funnel by a fixing ring. Before obtaining the sealed engagement, there are three separate parts, namely the inlet funnel, the filter cartridge and the fastening ring. By mounting the filter cartridge by pushing it from below upwards into the funnel base, the whole filter cartridge does not first have to be moved past a sealing surface, but only the upper part of the cartridge, which carries the sealing means, need be pushed through the base with a sealing seat.

DE 10 2004 026 188 proposes a cartridge and an apparatus for filtering liquids that allow the user to determine the correct and thus liquid-tight fit of the cartridge in the receptacle. The cartridge snaps into a fixing means in a manner discernible by the user. This approach is well proven, but it involves a certain additional expenditure in terms of material and manufacture.

DE 203 80 258 shows a receptacle with a flange and a receiving area. A cartridge can be inserted into the receiving area along the longitudinal axis of the receptacle with the aid of a retaining protrusion. To attach the cartridge to the receptacle, the retaining protrusion engages the flange in an interlocking manner through rotation of the cartridge. This is a typical bayonet connection.

The cartridge of DE 203 80 258 comprises two retaining protrusions comprising a relatively small volume in comparison to the remaining cartridge. In order to create a pressing force sufficient to seal the cartridge against the receptacle, however, the retaining protrusion must withstand high loads, in particular, when complete sealing is to be accomplished, in order safely to filter out substances hazardous to health from the water. Tests exist for this purpose. In these tests, the levels of contaminants in the input water have to be reduced by several orders of magnitude in order to pass the test. In such cases, the seal may not exhibit any bypass. The sealing function must be guaranteed over the entire lifespan of the apparatus, i.e. the retaining elements required to apply the sealing force may not be subject to fatigue over time. The retaining protrusions of the cartridge shown in DE 203 80 258 can, however, relax so that the required sealing force is no longer reliably applied.

Moreover, it cannot be excluded that the cartridge shown in DE 203 80 258 is attached to the receptacle incorrectly. Thus, it may happen that the retaining protrusions are not slid onto the flange completely, so that liquid-tight sealing cannot be guaranteed.

It is an object of the present invention to provide an apparatus of the type mentioned above, wherein the cartridge is connectable to the receptacle in such a manner that, on the one hand, the stresses arising from liquid-tight sealing can be securely absorbed and, on the other hand, it is guaranteed that the cartridge is only attachable to the receptacle in a correct position.

The object is achieved according to a first aspect of the invention by providing an apparatus for treating a liquid according to claim 1.

The protrusion can be formed as a solid component that allows large forces to be absorbed through the widening of its cross-section, so that the liquid-tight sealing can be guaranteed.

The solution according to the invention principally relates to gravity-driven apparatuses for treating the liquid, in particular water, but its use is not limited thereto, and it can also be used with pressure-driven apparatuses. The receptacle for collecting the liquid to be treated is generally denoted as a funnel in gravity-driven apparatuses and as a tank in pressure-driven apparatuses.

In all embodiments, the first and second axes will generally be body axes of the receptacle and cartridge respectively, more particularly principal axes. The first axis in particular may be a longitudinal axis of the receptacle. The first axis will, in the position of use of the receptacle (with the receptacle filled or able to be filled), be an essentially upright or vertical axis. The second axis may be a longitudinal axis of the cartridge. It is in any case essentially parallel to the first axis in the second position. In summary, in the apparatus according to the invention, the first and second axes are either longitudinal axes of the receptacle and the cartridge, respectively, or the apparatus is one in which at least one of the first and second axes is not a longitudinal axis.

It is observed that the term position is used herein to denote both location and stance or orientation, in particular of the cartridge. Thus, an internal movement of the cartridge that does not result in displacement of its centre of gravity is also referred to as a change in position.

In an embodiment of the apparatus , the first and second axes are essentially parallel to each other during placement from the first into the second position, and the second locking device includes an insertion opening by which, in the first position of the cartridge, the second locking device is guidable into the first locking device in an interlocking manner by a movement directed essentially perpendicularly to the first axis relative to the receptacle, and the cartridge is placeable into the second position by rotation about the second axis.

In contrast to a bayonet connection, the second locking device is introduced into the first locking device by a movement of the cartridge perpendicular to the axis of the receptacle (the first axis). This movement is already sufficient to cause the shaped sections to engage each other, so that axial forces can be transmitted between the cartridge and the receptacle whilst the cartridge is still in the first rotary position. This contrasts with a bayonet connection, in which the cartridge has no axial hold in the first rotary position.

The cartridge is already attached to the receptacle in the first rotary position, so that the user receives a first feedback that he has inserted the cartridge correctly. In the first rotary position, however, the liquid cannot be treated yet, since the drain opening and the inlet opening do not register yet. In the event of the user filling liquid into the receptacle in the first rotary position, the liquid would either flow past the cartridge down the side in a manner discernible for the user, and not flow into the cartridge, or no water would exit from the receptacle in the direction of the cartridge. Only when the user has turned the cartridge into its second rotary position do the drain opening and the inlet opening register, so that the liquid to be treated can flow from the receptacle into the cartridge. Thus, treatment of the liquid when the cartridge is not in the second rotary position is prevented.

In an embodiment, the first locking device includes a rim, partially surrounding the first axis so as to define an insertion opening of the first locking device, wherein the rim includes at least one part projecting radially inwardly with respect to the first axis, the second shaped section includes a protrusion for being received in the insertion opening defined by the rim, the protrusion including at least one part projecting radially outwardly with respect to the second axis, and the radially projecting parts of at least one of the rim and the protrusion of the second shaped section define a groove for receiving the radially projecting parts of the other of the rim and the protrusion of the second shaped section.

This embodiment functions in a manner somewhat similar to a bayonet lock, except that there is already axial hold in the first rotary position. The insertion opening defined by the rim is wide enough to receive the protrusion of the second shaped section in a movement directed perpendicularly to the first and second axes.

In a variant of this embodiment, one of the first and second shaped sections is provided with a protrusion having a free end and widening towards the free end, and the other of the first and second shaped sections is provided with a groove corresponding to the protrusion, arranged radially within the rim with respect to the first axis in the first and second rotary positions.

There is thus a double lock holding the cartridge to the receptacle, namely a radially inner lock between groove and widening protrusion and a radially outer lock between the rim and the protrusion of the second shaped section (part of the cartridge's locking device).

In a particular embodiment of this variant, the inlet opening is arranged between the groove corresponding to the protrusion and the radially projecting parts of the second shaped section in at least the second rotary position.

As a result, the axially directed forces holding the cartridge to the receptacle are exerted on both sides of the inlet opening, since it is located radially in between the two interlocking arrangements. This enables a more uniform application of pressing forces sealing the inlet opening with respect to the drain opening.

In a further embodiment of the variant, the inlet opening is provided in the protrusion of the second shaped section and a blind hole projecting from a surface of a free end of the protrusion of the second shaped section is provided radially opposite the inlet opening with respect to the second axis.

The lock between the groove and widening protrusion (the radially inner lock identified above) acts as a fulcrum point. The very slight projection of the blind hole pushes the inlet opening against the drain opening, allowing better sealing.

In another embodiment, the first cartridge is rotatable from the first position into the second position by rotation about an axis of rotation essentially perpendicularly to the first or second axis. For example, the cartridge can be attached to the receptacle by means of a hinge, which carries the bulk of the cartridge's weight. The second locking device can thus be made smaller in dimension, and need only deliver the pressing force needed to provide the liquid-tight sealing of the cartridge with respect to the receptacle. A resilient section, for example in the form of a snap-lock element, may suffice for this. The resilient section engages the undercut of the protrusion in the second position of the cartridge and holds the cartridge in the second position, so that a liquid-tight seal is created.

The first and second axes may be essentially parallel to each other during placement from the first into the second position, wherein the cartridge is placeable from the first position into the second position by a movement directed along the first and second axes. Again, a resilient section can be provided that engages the undercut of the protrusion. In this embodiment, the first and second locking devices are very simple in structure, since only a minimum number of parts are needed. Rotating the cartridge is not necessary for placement from the first into the second position.

In an embodiment, the second locking device comprises at least one snap-lock element comprising a section for hooking behind the protrusion along at least a part of the circumference of the protrusion, wherein the snap-lock element is at least partially formed of a resilient material to enable displacement of the section for hooking behind the protrusion during the movement directed along the first and second axes. In this embodiment, the second locking device can be very simple in structure. Rotating the cartridge in placing it from the first into the second position is not necessary.

In an embodiment of the apparatus, the drain opening is arranged outside the first shaped section. The first shaped section, and in particular the protrusion, are thus not weakened by the drain opening and can thus safely withstand the forces required to provide a liquid-tight seal.

In an embodiment, wherein the at least one insertion opening includes a first insertion opening included in the first locking device, the drain opening is arranged behind the protrusion with respect to the first insertion opening. In this embodiment, the drain seals, in particular those surrounding the drain opening, are only stressed when the cartridge is rotated into the second position, whereas drain seals arranged in front of the protrusion with respect to the insertion opening are also stressed as the cartridge is inserted into the first shaped section by means of the movement perpendicular to the first axis. The stress is caused by the fact that the surface of the cartridge lies against the drain opening. Every relative movement will cause a certain amount of friction leading to abrasion of the drain seal. The fewer relative movements act on the drain seal, the smaller the abrasion is, and the longer the drain seal can fulfil its intended purpose.

In an embodiment, the inlet opening is provided with an inlet seal that surrounds it. In the event that the cartridge is in the first rotary position and/or not in the second rotary position, the inlet seal seals the inlet opening with respect to the receptacle and the cartridge, so that liquid is prevented from flowing through the drain opening and further into the inlet opening. Thus, all of the liquid filled into the receptacle will flow past the cartridge, so that the user will notice that the cartridge is not in the second rotary position. Since the inlet opening and the drain opening only register in the second rotary position, this arrangement of the inlet seal allows the lid of the cartridge, together with the inlet seal, to close the inlet opening in a liquid-tight manner, so that no liquid can leave the receptacle.

If the cartridge is in the second rotary position, the inlet seal will also seal the inlet opening with respect to the receptacle. In this case, however, the inlet opening and the drain opening are positioned in registration with each other so that, in this case, liquid to be treated is prevented from escaping laterally between the receptacle and the cartridge, and thus from reaching the filtrate in an untreated state.

In an embodiment, the drain opening is provided with a drain seal that surrounds it. In case the cartridge is not in the second rotary position, the drain seal seals the drain opening with respect to the cartridge so that liquid is prevented from flowing through the drain opening and further into the inlet opening.

If the cartridge is in the second rotary position, the drain seal also seals the drain opening with respect to the cartridge. In this case, however, the inlet opening and the drain opening are positioned in registration with each other so that, in this case, liquid to be treated is prevented from escaping laterally between the receptacle and the cartridge, and thus from reaching the filtrate in an untreated state.

In an embodiment of the apparatus, wherein the first shaped section comprises a first protrusion with a first free end, the cross-section of the first protrusion widens toward the first free end. Furthermore, the second shaped section comprises a second groove corresponding to the first protrusion. This embodiment has proved particularly effective for transmitting large forces.

The second shaped section may be provided with a second protrusion with a second free end, wherein the cross-section of the second protrusion widens toward the second free end. Also, the first shaped section may be provided with a first groove corresponding to the protrusion. This embodiment has proved particularly effective for transferring large forces.

In an embodiment, the first groove and/or the second groove or the protrusion of the first shaped section and/or the second protrusion are provided with an inclination with respect to a plane extending perpendicularly to the first and/or second axis. The inclination is configured such that the cartridge is closer to the receptacle in the second rotary position than in the first rotary position. Thus, in this embodiment, the cartridge performs a translatory movement in addition to the rotary movement when rotated. With this embodiment the pressing force acting on the inlet seal and the drain seal is increased by rotating the cartridge into the second rotary position. The increased pressing force leads to an increased sealing effect of the inlet seal and the drain seal so that the liquid-tight seal in particular can be realised well.

In an embodiment, the receptacle comprises a first abutment element and the cartridge comprises a second abutment element for defining the second rotary position of the cartridge. When the first abutment element comes up against the second abutment element, the cartridge cannot be turned any further. In this embodiment, the user receives clear feedback as soon as the second rotary position has been reached. Since the user clearly notices whether or not the cartridge is in the second rotary position, the risk of the apparatus being operated in an improper manner is reduced.

The apparatus may be provided with an indentation in which a lug is insertable in the second rotary position of the cartridge. The indentation can be arranged on the receptacle and the lug on the cartridge or vice versa. The user thus receives further feedback in haptic form, since the indentation in co-operation with the lug brings about a snapping of the cartridge into the second rotary position. In this way too, the user is signalled that the cartridge is in the second rotary position. The risk that the apparatus is operated in an improper manner is thus reduced further.

In addition, the apparatus may be provided with a blocking element for defining the direction of rotation of the cartridge between the first and second rotary positions. Again, the blocking element can be arranged either on the cartridge or on the receptacle. The blocking element serves to ensure that the cartridge can only be rotated between the first and second rotary positions in one direction of rotation. Thus, it is defined that the cartridge must be rotated clockwise from the first into the second rotary position and anti-clockwise from the second into the first rotary position. A different direction of rotation cannot be executed in this embodiment, and cannot lead to damage to the locking devices.

In an embodiment, the apparatus is provided with a slotted link guide for defining the first and second rotary positions of the cartridge. This can be implemented, for example, in the form of recesses and pins moveable therein. The recesses can be arranged on the receptacle and the pins on the cartridge or vice versa. In addition to the definition of the first and second rotary positions, the direction of rotation of the cartridge from the first into the second rotary position and back can also be defined in an unequivocal manner so that any rotation in the incorrect direction, which could lead to damage to the locking devices, is avoided.

In an embodiment, the apparatus comprises a rotary slider, which opens the inlet opening and/or the drain opening by rotation of the cartridge from the first into the second rotary position. If the cartridge is turned back into the first rotary position for replacement, the rotary slider closes the inlet opening and/or the drain opening again. The rotary slider has the effect that liquid that is present in the receptacle can only flow into the cartridge via the drain opening if the cartridge is in the second rotary position.

In an embodiment, the apparatus comprises a closure element operative along the first axis, which opens the inlet opening and the drain opening in the second rotary position of the cartridge. If the first and second groove or the first and second protrusions are provided with an inclination with respect to a plane extending perpendicularly to the longitudinal axis, the cartridge performs a translatory movement as it is rotated from the first into the second rotary position. In contrast to the rotary slider, which is opened and closed by means of a rotating movement of the cartridge, the closure element is opened and closed through a translatory movement. If the cartridge is rotated back into the first rotary position for replacement, the closure element closes the inlet opening and/or the drain opening again. For reliable closing, a returning element, such as a spring, can be provided. The closure element effects that the liquid present in the receptacle can only flow into the cartridge via the drain opening if the cartridge is in the second rotary position. The closure element can be arranged on either the receptacle or the cartridge.

In an embodiment of the apparatus for treating a liquid, the second locking device is releasably attachable to the cartridge. This can be achieved, for example, by providing the second locking unit with an external thread, which is screwed into a corresponding internal thread. It is thus possible, for example, to reuse the second locking device when the cartridge is exhausted. Furthermore, a different material can easily be used for the second locking device than for the walls of the cartridge. Material costs can be saved and manufacture can be simplified.

According to another aspect, the object underlying the invention is achieved by providing a receptacle for collecting a liquid to be treated with a first or second locking device of an apparatus according to the invention.

According to another aspect, the object underlying the invention is achieved by providing a cartridge for treating a liquid including a first or second locking device of an apparatus according to the invention. The effects resulting therefrom correspond to those set out for the apparatus according to the invention. It is equally possible to arrange the first locking device or the second locking device on the receptacle and the respective corresponding other locking device on the cartridge.

A further aspect of the invention concerns a method of releasably attaching a cartridge for treating a liquid to a receptacle for collecting the liquid to be treated, comprising the following steps:
- providing an apparatus for treating a liquid according to any one of the embodiments described above, and
- introducing the second locking device into the first locking device by placing the cartridge from a first position into a second position in such a manner that the drain opening and the inlet opening register with each other.

The advantages resulting therefrom correspond to those described for the apparatus according to the invention.

The invention will be described in further detail with reference to the accompanying drawings, wherein:
Fig. 1 is a bottom view of a first embodiment of a receptacle,
Fig. 2 is a side view of the first embodiment shown in Fig. 1 of the receptacle,
Fig. 3 is a cross-sectional view of the first embodiment of the receptacle along the cross-sectional plane A-A defined in Fig. 2,
Fig. 4 is a top plan view of a first embodiment of a cartridge, wherein only relevant parts of the cartridge are shown,
Fig. 5 is a side view of the first embodiment of the cartridge shown in Fig. 4, wherein only relevant parts of the cartridge are shown,
Fig. 6 is a perspective view of the first embodiment of the cartridge shown in Fig. 4, wherein only relevant parts of the cartridge are shown,
Fig. 7 is a bottom view of a second embodiment of the receptacle,
Fig. 8 is a side view of the second embodiment of the receptacle shown in Fig. 7,
Fig. 9 is a cross-sectional view of the second embodiment of the receptacle along the cross-sectional plane B-B defined in Fig. 8,
Fig. 10 is a top plan view of a second embodiment of the cartridge, wherein only relevant parts of the cartridge are shown,
Fig. 11 is a side view of the second embodiment of the cartridge shown in Fig. 10, wherein only relevant parts of the cartridge are shown,
Fig. 12 is a perspective view of the second embodiment of the cartridge shown in Fig. 10, wherein only relevant parts of the cartridge are shown,
Fig. 13 shows a first embodiment of an apparatus for treating a liquid,
Fig. 14 shows a second embodiment of the apparatus for treating a liquid,
Fig. 15 shows a third embodiment of the apparatus for treating a liquid, wherein the cartridge is in a first rotary position,
Fig. 16 shows the third embodiment of the apparatus shown in Fig. 15, wherein the cartridge is in a second rotary position,
Fig. 17 is a depiction of principles of an embodiment of a first or second shaped section,
Fig. 18 shows a fourth embodiment of the apparatus, wherein the cartridge is in the first rotary position,
Fig. 19 shows the fourth embodiment of the apparatus shown in Fig. 18, wherein the cartridge is in the second rotary position,
Fig. 20 is a top plan view of a seventh embodiment of the receptacle,
Fig. 21 is a side view of the cartridge shown in Fig. 20 along the viewing direction indicated by the arrows B-B in Fig. 20,
Fig. 22 is a cross-sectional view of the receptacle shown in Fig. 20 along the cross-sectional plane defined in Fig. 20,
Fig. 23 is a top plan view of a seventh embodiment of the cartridge,
Fig. 24 is a cross-sectional view of the cartridge shown in Fig. 23 along the cross-sectional plane D-D defined in Fig. 23, wherein only relevant parts are shown,
Fig. 25 shows a fifth embodiment of the apparatus for treating a liquid in a first position,
Fig. 26 shows the fifth embodiment shown in Fig. 25 in a second position,
Fig. 27 shows a sixth embodiment of the apparatus for treating a liquid,
Fig. 28 is a perspective view of a locking device of a tenth embodiment of a cartridge for treating a liquid,
Fig. 29 is side view of the locking device of the cartridge of Fig. 28, and
Fig. 30 is a cross-sectional view of the locking device of the cartridge of Figs. 28 and 29 and of a corresponding part of a corresponding embodiment of a locking device of a receptacle for collecting the liquid to be treated.

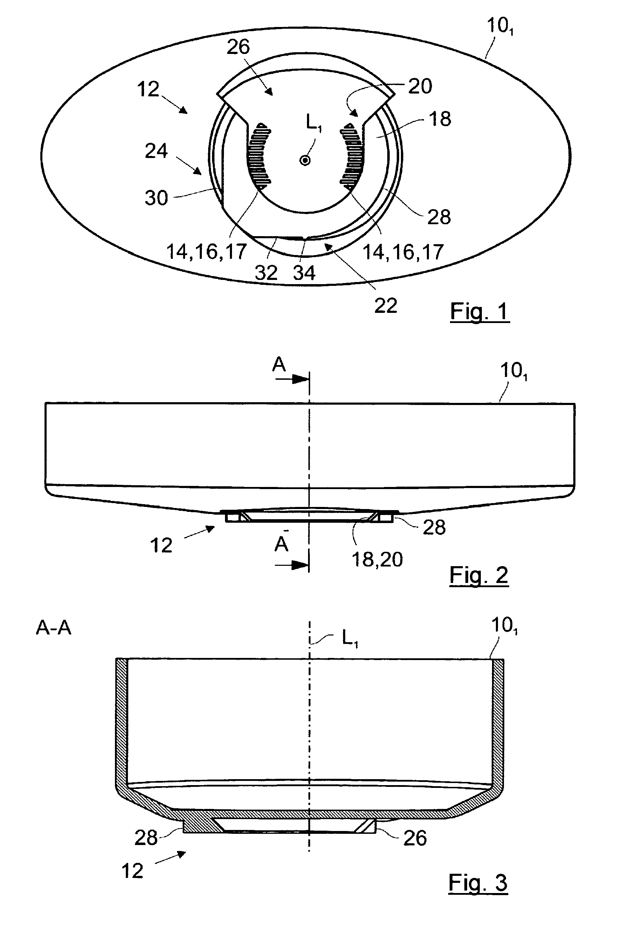

In Fig. 1, a top plan view of a first embodiment of a receptacle 10₁, having a first longitudinal axis L₁ is shown. The receptacle 10₁ is provided with a first locking device 12, in which a drain opening 14 is arranged. In the example shown, two drain openings 14 are provided, each formed as a plurality of slots 16 and each surrounded by a drain seal 17. The first locking device 12 is provided with a first shaped section 18 formed as a first groove 20. Furthermore, the first locking device 12 is provided with a first abutment element 22 and a blocking element 24, as well as a first insertion opening 26. The blocking element 24 is formed by a first straight section 30, and the first abutment element 24 is formed by a second straight section 32, which are present on a surface area 28 of the first locking device 12. The surface area 28 extends in an essentially circular shape, but then transitions tangentially into the first straight section 30 and into the second straight section 32. The first and second straight sections 30,32 approximately enclose a right angle. The first abutment element 22 is provided with a lug 34 which is present at the transition between the surface area 28 and the second straight section 32.

In Fig. 2, the first embodiment of the receptacle 10₁ is depicted by means of a side elevational view, and in Fig. 3 by means of a cross-sectional view along the plane A-A defined in Fig. 2. The first shaped section 18 of the first locking device 12 in the shape of the first groove 20 is clearly recognisable in Fig. 2.

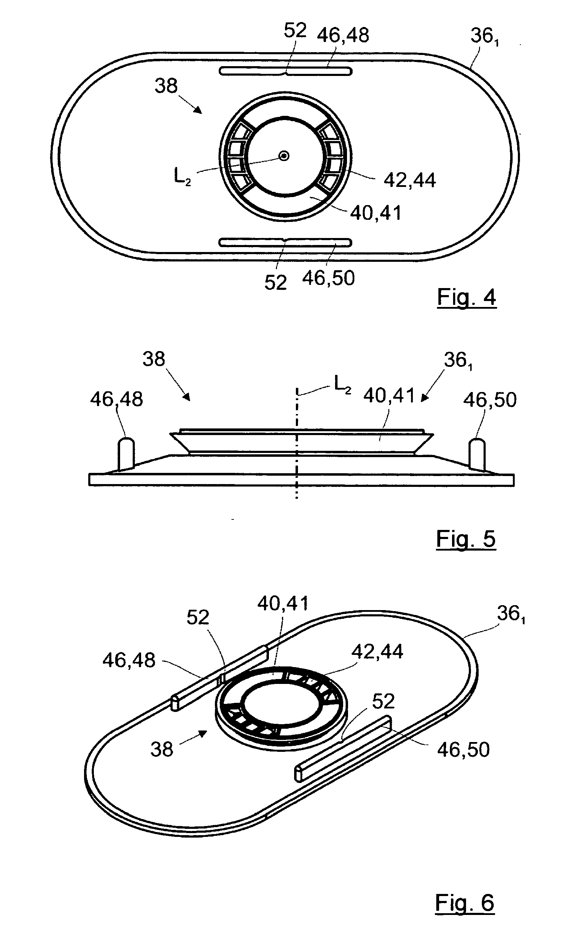

In Fig. 4, a first embodiment of a cartridge 36₁ having a second longitudinal axis L₂ is depicted by means of a top plan view. For the sake of clarity, only those parts of the cartridge 36₁ relevant to the present description are shown. The cartridge 36₁ is provided with a second locking device 38 with a second shaped section 40, which is formed as a second protrusion 41 (cf. Fig. 5). An inlet opening 42 is arranged in the second locking device 38, and is surrounded by an inlet seal 44. The cartridge 36 comprises a second abutment element 46, which, in the first embodiment, is formed as a first elevation 48 and a second elevation 50, which are essentially parallel to each other, and are each provided with an indentation 52.

The parts of cartridge 36₁ relevant to the present description are shown in perspective in Fig. 6.

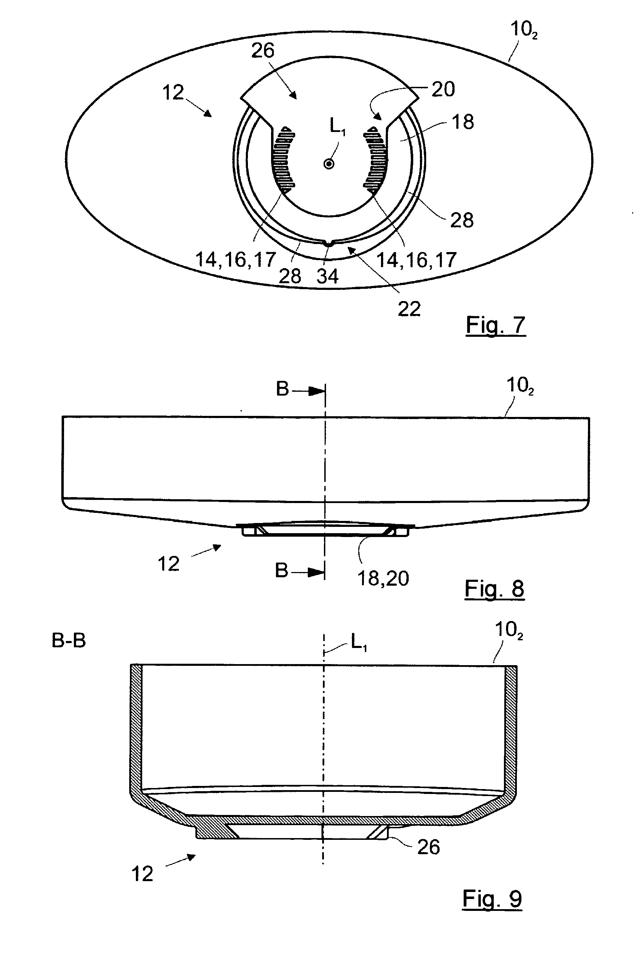

In Fig. 7, a top plan view of a second embodiment of the receptacle 10₂ is depicted. It differs from the first embodiment in that the first locking device 12 does not comprise a blocking element 24 or a first and second straight section 30,32. The first abutment element 22 is formed by the lug 34.

In Fig. 8, the second embodiment is depicted by means of a side view and in Fig. 9 by means of a cross-sectional view along the cross-sectional plane B-B defined in Fig. 8.

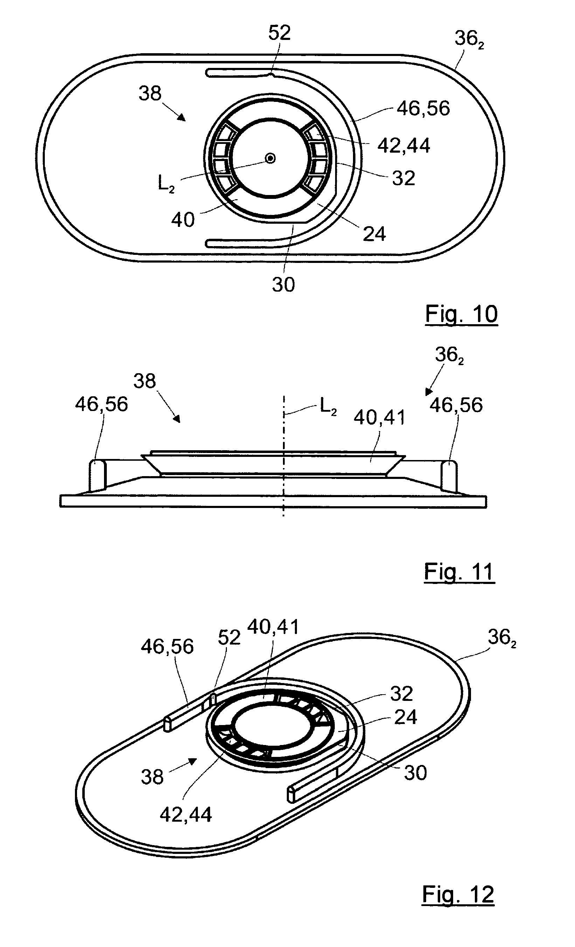

In Fig. 10, a second embodiment of the cartridge 36₂ is depicted, wherein, again, only those parts of the cartridge 36₂ that are relevant to the present description are shown. It differs from the first embodiment in that the second locking device 38 comprises the blocking element 24. The blocking element 24, in turn, is formed by the first straight section 30, but in this example also comprises the second straight section 32. The first and second straight sections 30,32 are integrated into the second shaped section 40 and are provided with the same profile as the second protrusion 41. Furthermore, the second abutment element 46 is formed as an uninterrupted elevation 56, which extends approximately in a U-shape and is provided with the indentation 52.

In Fig. 11, the second embodiment of the cartridge 36₂ is depicted by means of a side view and in Fig. 12 by means of a perspective view, wherein, again, only those parts of the cartridge relevant to the present description are shown.

To connect the first embodiment of the cartridge 36₁ to the first embodiment of the receptacle 10₁, the second locking device 38 of the cartridge 36 is inserted into the first locking device 12 of the receptacle 10 through the first insertion opening 26. To this end, the cartridge 36 is moved relative to the receptacle 10 in a movement directed perpendicularly to the first longitudinal axis L₁ whilst it is in the first rotary position. In the process, the first and second shaped sections 18,40 engage in an interlocking manner, so that axial forces can already be transmitted and the cartridge 36 is already attached to the receptacle 10. When the first longitudinal axis L₁ of receptacle 10 is aligned with the second longitudinal axis L₂ of the cartridge 36, the first locking device 12 abuts the second locking device 38. In the process, the first elevation 48 comes to lie against the first straight section 30. In this way, it is ensured that the cartridge 36 can only be rotated in one direction.

Subsequently, the cartridge 36₁ is rotated from the first rotary position to a second rotary position, in which the second elevation 50 comes to lie against the second straight section 30. At the same time, the lug 34 snaps into the indentation 52. In the second rotary position, the inlet opening 42 and the drain opening 14 register with each other. Since the second locking device 38 is provided with a symmetrical structure in the first embodiment of the cartridge 36₁, the cartridge 36 can also be connected to the receptacle 10 when rotated by 180° about the longitudinal axis.

Since the uninterrupted elevation 56 of the second abutment element 46, in correspondence with the second embodiment of the cartridge 36₂, extends in an approximately U-shaped manner and thus not completely symmetrically, the second locking device 38 can only be inserted into the first locking device 12 through the first insertion opening 26 in a single position. Accordingly, the uninterrupted elevation 56 is only provided with one lug 52. Again, the first and second longitudinal axes L₁, L₂ are aligned with each other when the first and second locking devices 12,38 abut against each other, in case of a movement of the cartridge 36₂ directed perpendicularly to the first longitudinal axis L₁. Here, the first straight section 30 comes to lie against the first groove 20 in the first rotary position of the cartridge 36₂ so that the cartridge 36₂, in turn, can only be rotated in one direction from the first into the second rotary position. In the second rotary position, the first groove 20 comes to lie against the second straight section 32, and, at the same time, the lug 34 snaps into the indentation 52.

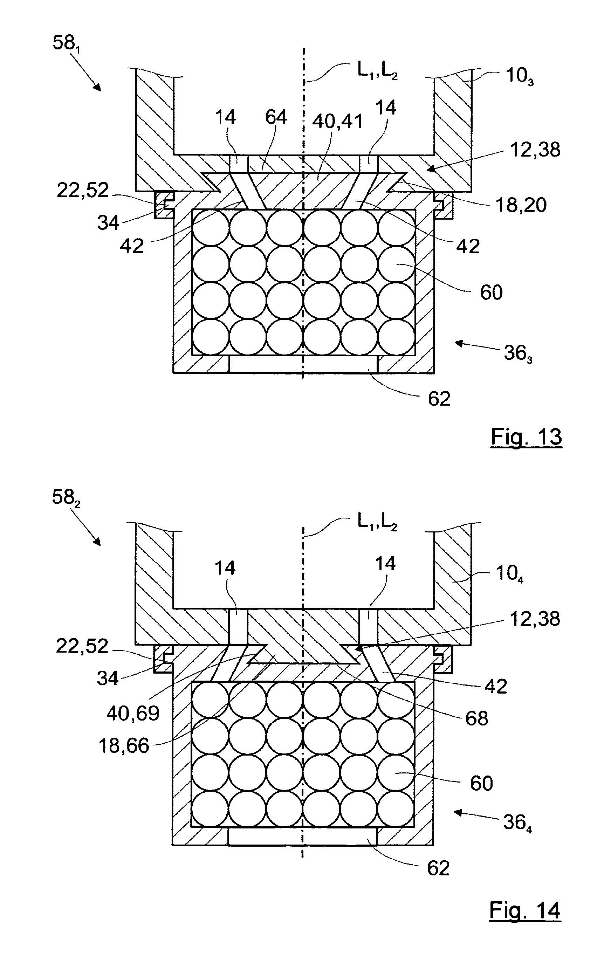

In Fig. 13, an apparatus 58₁ for treating a liquid according to a first embodiment is depicted by means of a cross-sectional view. The apparatus 58₁ comprises the receptacle 10₃ according to a third embodiment, which largely corresponds to the one in the first embodiment shown in Figs. 1 to 3, except for its dimensions. Furthermore, the apparatus 58₁ comprises the cartridge 36₃ according to a third embodiment, which also corresponds essentially to the one according to the first embodiment shown in Figs. 4 to 6, except for its dimensions. The cartridge 36 is in the second rotary position, in which the inlet opening 42 and the drain opening 14 register with each other, so that the water can pass from the receptacle 10 into the cartridge 36, where it is treated by treatment means 60. After the water has flown through the treatment means 60, the treated water exits the cartridge 36₃ through an outlet 62.

The second protrusion 41 of the second shaped section 40 of the cartridge 36₃ is provided with a second free end 64, wherein the cross-section of the second protrusion 41 widens towards the second free end 64, whereas the first shaped section 18 of the receptacle 10 comprises the first groove 20, which corresponds to the second protrusion. The drain opening 14 extends through the first locking device 12, and the inlet opening 42 extends through the second locking device 38.

In Fig. 14, a second embodiment of the apparatus 58₂ for treating a liquid is depicted. This apparatus 58₂ comprises the receptacle 10₄ according to a fourth embodiment which again largely corresponds to the first embodiment. Furthermore, the apparatus 58₂ comprises the cartridge 36₄ according to a fourth embodiment, which again largely corresponds to the first embodiment. However, the first shaped section 18 of the receptacle 10₄ is provided with a first protrusion 66 having a cross-section widening toward a first free end 68. The second shaped section 40 of the cartridge 36 is formed as a second groove 69 corresponding to the first protrusion 66. The drain opening 14 extends radially outside of the first locking device 12, and the inlet opening 42 extends radially outside the second locking device 38.

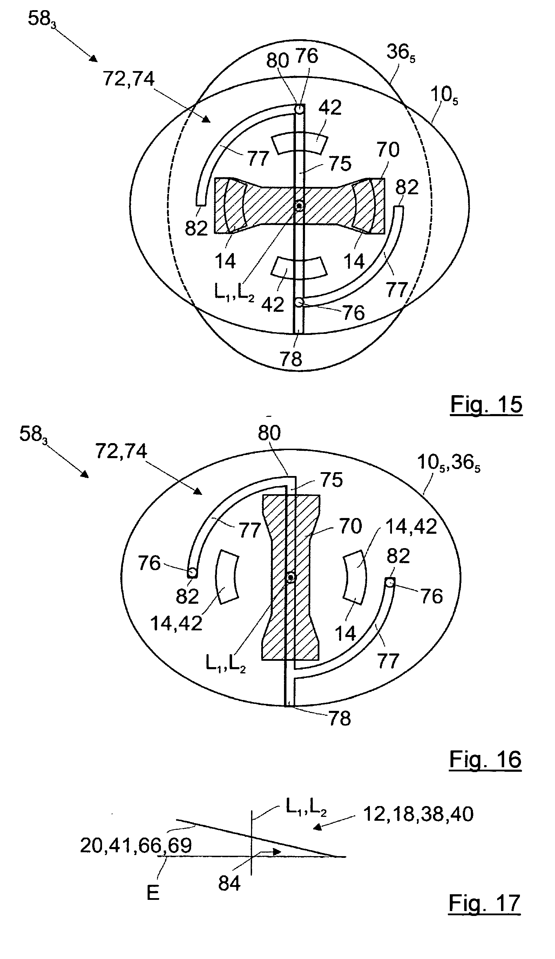

In Fig. 15, the apparatus 58₃ according to a third embodiment is depicted by means of a top plan view illustrating the principles underpinning its construction. The cartridge 36₅ according to a fifth embodiment is in the first rotary position, in which the inlet openings 42 do not register with the drain openings 14. The apparatus 58₃ comprises a rotary slider 70, which, in the first rotary position of the cartridge 36₅ closes off the drain opening 14 of the receptacle 10₅. The first and second locking devices 12,38 are not shown for reasons of clarity.

In Fig. 16, the cartridge 36₅ is in a second rotary position, in which the drain openings 14 and the inlet openings 42 are positioned in registration with respect to each other. By turning the cartridge 36₅ from the first into the second rotary position, the rotary slider 70 is caused to be rotated by the same amount and opens the drain opening 14 of the receptacle 10₅ so that the water can flow from the receptacle 10₅ into the cartridge 36 via the drain opening 14 and the inlet opening 42.

The first and second rotary positions of the cartridge 36₅ are defined by means of a slotted link guide 72. In the example shown, a recess 74 extends in the receptacle 10₅, within which one or, as shown here, two pins 76 of the cartridge 36₅ can be moved. The recess 74 is divided into a straight section 75 and two circular sections 77. The straight section 75 is provided with an open end 78 via which the two pins 76 can be introduced into the recess 74 in a movement directed towards the first longitudinal axis L₁ of the receptacle 10₅ when the cartridge 36₅ is in its first rotary position. Once the first and second longitudinal axes L₁, L₂ are aligned, one of the pins 76 abuts against a closed end 80 of the straight section of the recess 74. The cartridge 36 can now be moved along the circular section 77 from the first into the second rotary position. The second rotary position is reached when the two pins 76 abut against an inner end 82 of the circular sections 77.

In Fig. 17, a further embodiment of the first and/or second locking devices 12,38 is depicted in principle. In this embodiment, the first or second shaped sections 18,40 are provided with an inclination 48 with respect to a plane E extending perpendicularly to the first and second longitudinal axes L₁, L₂. Consequently, the first groove 20, the second protrusion 41, the first protrusion 66 or the second groove 69 may be provided with the inclination 84.

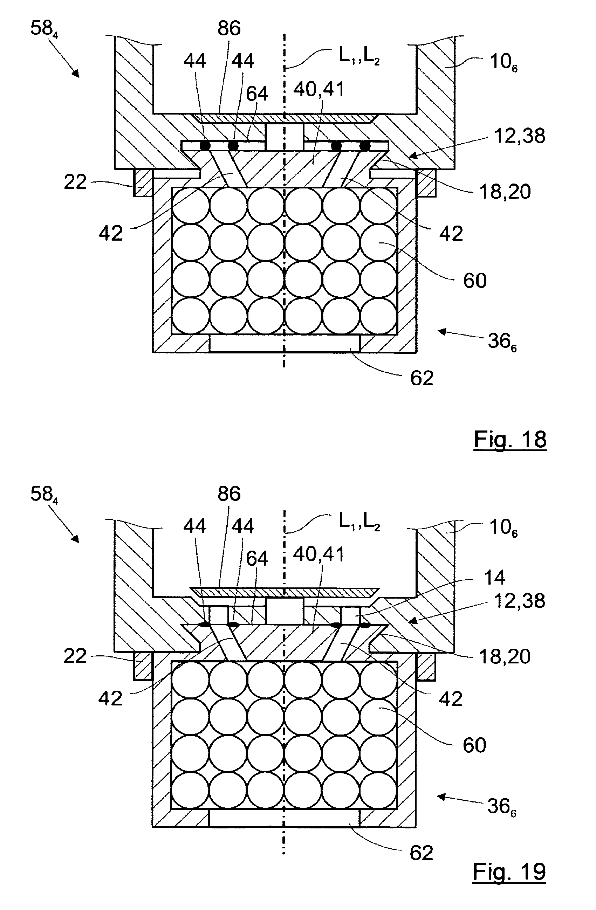

The apparatus 58₄ shown in Figs. 18 and 19 comprises the first locking device 12 according to the embodiment shown in Fig. 17, in accordance with which the first groove 20 is provided with the inclination 84. In Fig. 18, the cartridge 36 is in its first rotary position, in which the inlet opening 42 and the drain opening 14 do not register with each other. For this reason, the drain opening 14 is not visible in Fig. 18. In Fig. 19, the cartridge 36 is in its second rotary position. Due to the inclination 84 of the first groove 20 (cf. Fig. 17), the cartridge 36 will perform a translatory movement along the longitudinal axes L₁, L₂ in addition to its rotary movement when turned from the first into the second rotary position. As a result of this, the distance between the receptacle 10₆ and the cartridge 36₆ is reduced. By means of the translatory movement, a pressing force is exerted on the inlet seals 44, so that they are compressed and seal the cartridge 36₆ in a liquid-tight manner with respect to the receptacle 10₆.

In the embodiment shown in Figs. 18 and 19, the apparatus 58 further comprises a closure element 86, which is placeable from a closed position, in which it closes off the drain opening 14 (cf. Fig. 18) into an open position, in which the drain opening 14 is open (cf. Fig. 19) through the translatory movement of the cartridge 36₆. In the open position, the water can flow into the cartridge 36 from the receptacle 10. If the cartridge 36 is released from receptacle 10, the closure element 86 is adjusted back into its closed position. For this purpose, a returning element, such as a spring, not shown, can be provided.

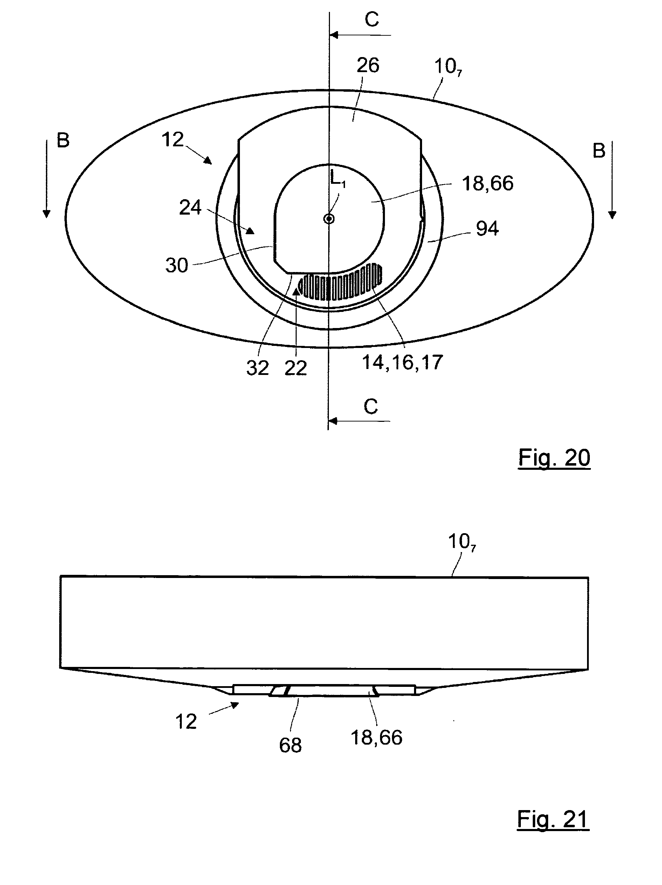

In Fig. 20, a seventh embodiment of the receptacle 10₇ approximately corresponding to the fourth embodiment of the receptacle 10₄ shown in Fig. 14 is depicted by means of a bottom view. It therefore also comprises the first shaped section 18 in the shape of the first protrusion 66 as part of the first locking device 12,. The first protrusion 66 is provided with the blocking element 24 in the shape of a first straight section 30, and it is provided with the first abutment element 22 in the shape of the second straight section 32. The drain opening 14, with the slots 16 and the drain seals 17, is arranged outside the first shaped section 18. The receptacle 10₇ is provided with a rim 94 that partially encircles the first protrusion 66, but is open to one side, where it forms the first insertion opening 26. The drain opening 14 is behind the first protrusion 66 as seen from the first insertion opening 26.

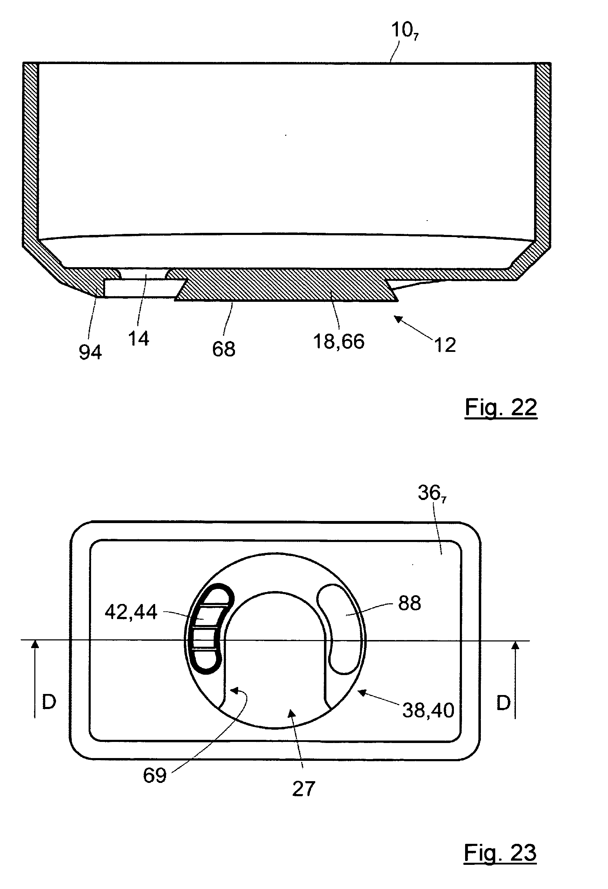

Fig. 21 shows the receptacle 10₇ by means of a side view in the viewing direction indicated by arrows B-B in Fig. 20, and Fig. 22 shows the receptacle 10₇ in a side plan view along the cross-sectional plane C-C defined in Fig. 20, wherein the side plan view of Fig. 22 is enlarged by about a factor 2.

Fig. 23 shows a seventh exemplary embodiment 36₇ of the cartridge 36₇ by means of a top plan view. The cartridge 36₇ is provided with the second locking device 38 with the second groove 69, which corresponds to the first protrusion 66 and enables a shape-lock between the cartridge 36₇ and the receptacle 10₇. The inlet opening 42, which is surrounded by the inlet seal 44, is also shown. It will be apparent that only one inlet opening 42 is provided. To make possible a uniform pressing force between the receptacle 10₇ and the cartridge 36₇, a blind hole 88, which is provided with the same external contour as the inlet opening 42, is provided on the opposite side. The second groove 69 is not completely closed but is provided with a second insertion opening 27 on one side.

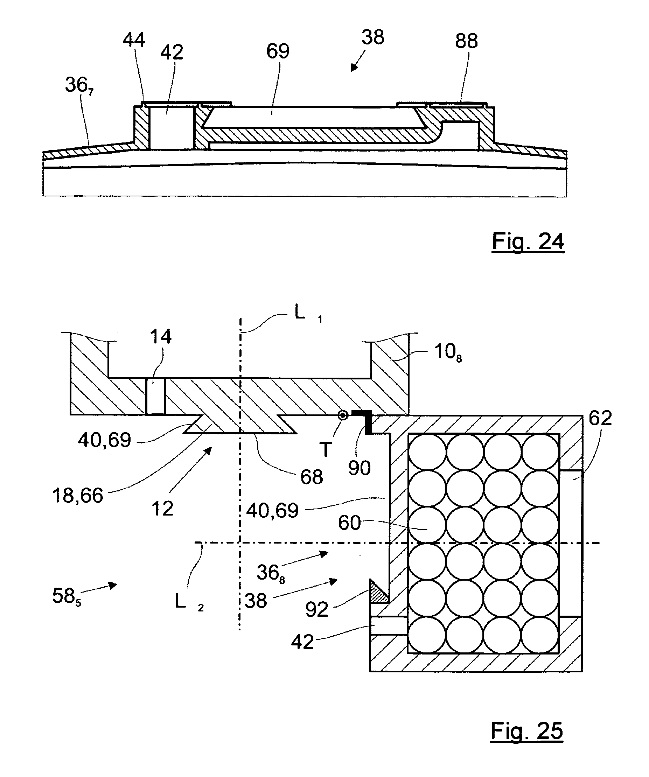

In Fig. 24, the cartridge 36₇ is depicted by means of a cross-sectional view along the cross-sectional plane D-D defined in Fig. 23.

Fig. 25 shows a fifth embodiment of the apparatus 58₅, comprising an eighth embodiment of each of the receptacle 10₈ and the cartridge 26₈. The receptacle 10₈ largely corresponds to the receptacle 10₇ shown in Fig. 7, but it is provided with a hinge 90 to which the cartridge 36₈ can be attached and rotated about an axis of rotation T that is essentially perpendicular to the longitudinal axes L₁ and L₂ of the receptacle 10₈ and the cartridge 36₈, respectively.

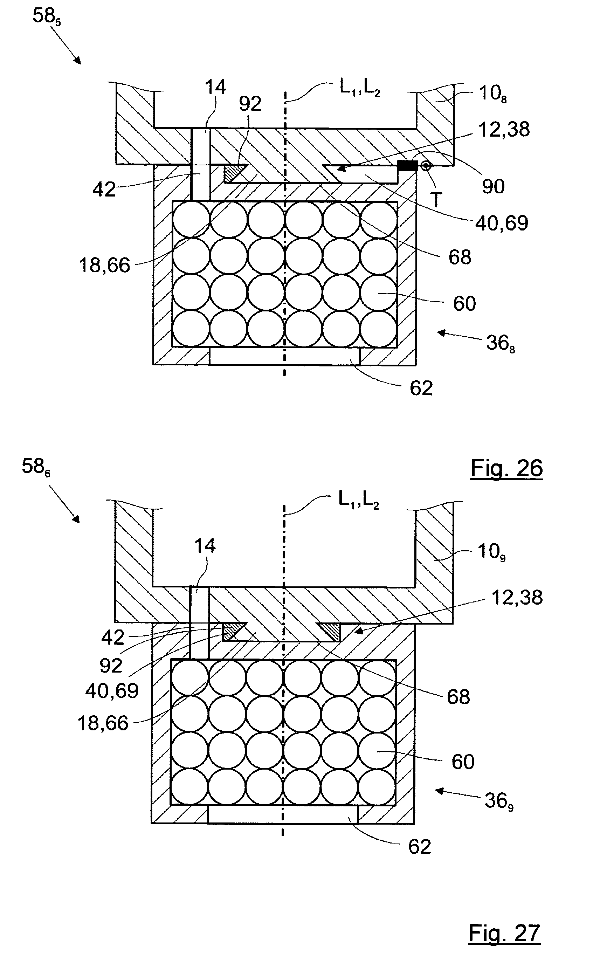

The second groove 69 is provided with a resilient section 92 which, as the cartridge 36₈ is turned into its second position, can be brought behind the first protrusion 66 and thus creates a shape-lock between the first and second locking devices 12,38, as shown in Fig. 26, in which the cartridge 36₈ is in its second position. Since the hinge 90 already carries part of the weight of cartridge 36₈, the resilient section 92 need not surround the entire circumference and be closed, but can be relatively small in size, as shown. It only has to be ensured that the resilient section 92 can exert sufficient pressing force to seal the drain opening 14 and the inlet opening 42 with respect to each other. For reasons of representation, the axis of rotation T in Figs. 25 and 26 does not extend exactly along the axis of rotation defined by the hinge 90 about which the cartridge 36₈ is rotated.

In Fig. 27, a sixth embodiment 58₆ of the apparatus for treating a liquid is depicted. It comprises a receptacle 10₉ largely corresponding to the receptacle 10₈ shown in Figs. 25 and 26, but is not provided with a hinge. The second locking device 38 of the cartridge 36₉ comprises the resilient section 92, which extends around the entire circumference and is closed in this embodiment. The resilient section 92 allows the cartridge 36₉ to be attached to the receptacle 10₉ by a movement directed along the longitudinal axes L₁ and L₂. In the process, a first portion of the resilient section 92 that hooks behind the first protrusion 66 is displaced radially outwardly, whereupon the resilient section 92 snaps into the undercut of the first protrusion 66. The undercut is to be understood as the portion of the first protrusion 66 between its first free end 68 and the receptacle 10₉ that has a smaller radial extent than the maximum radial extent. The resilient section 92 may be provided with a chamfer (not shown) directed radially inwardly and, along the longitudinal axes, outwardly, to facilitate snapping-in of the resilient section 92.

In a further variant, a plurality of snap-in hooks 93 protruding from the receptacle 10 can be provided instead of a circumferential resilient section. Each snap-in hook 93 comprises a portion hooking behind the first protrusion 66 and is at least partially made of a resilient material. The first protrusion 66 can displace the hooking portion radially outwardly during the movement along longitudinal axes L₁, L₂. Once the snap-in hooks 93 have passed the point of greatest radial extent, they move radially inwardly and slide into the undercut of the protrusion 66. The cartridge is thus attached to the receptacle 10.

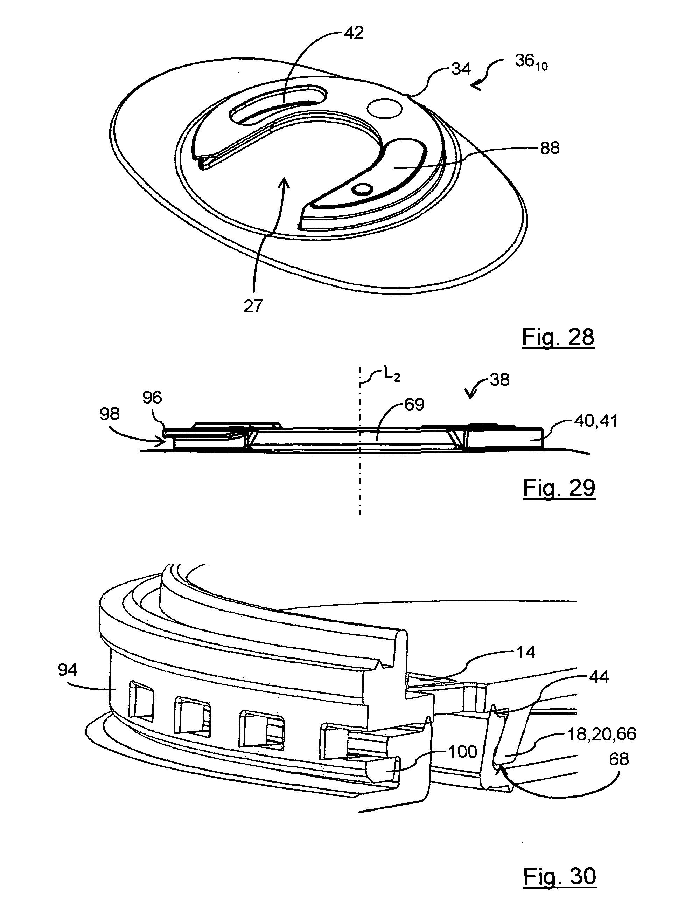

Figs. 28-30 show details of a locking device of a tenth embodiment of a cartridge 36₁₀. Features of a corresponding locking device of a receptacle are shown in Fig. 30.

The cartridge 36₁₀ is generally similar to the cartridge 36₇ shown in Figs. 23 and 24 in particular. The receptacle is similar to the receptacle 10₇ shown in Figs. 20-22.

With reference to Fig. 30, the receptacle includes a second locking device 38 that is provided with a rim 94. The rim 94 defines an insertion opening for a second protrusion 41 comprised in a second shaped section 40 of the locking device of the cartridge 36₁₀. This protrusion 41 includes at its free end a radially outwardly directed part 96, which defines a groove 98. The rim 94 is provided with a plurality of radially inwardly projecting parts 100 (one of which is just visible in Fig. 30). At least when the cartridge 36₁₀ is in the second rotary position, the radially inwardly projecting parts 100 are arranged in the groove 98, so as to provide an axial retention force locking the cartridge 36₁₀ to the receptacle. The surface of the groove 98 that contacts the projecting parts 100 to provide the axially directed retention force may be provided with an inclination with respect to a plane E (not shown in Figs. 28-30) extending perpendicularly to the first axis L₁, to help draw the cartridge 36₁₀ towards the receptacle as the cartridge 36₁₀ is turned from the first rotary position to the se-second rotary position.

The rim also includes an indentation 52 (not shown) into which a lug 34 is insertable in the second rotary position of the cartridge 36₁₀.

It is noted that the groove 98 does not extend along the entire outer circumference of the protrusion 41. It is provided along a section of the circumference, such that the inlet opening 42 is located radially in between the second axis (i.e. the axis of rotation of the cartridge 36₁₀ when turned from the first into the second rotary position) and the groove 98.

The second protrusion 40 has a cross-section that widens radially inwardly towards a free end thereof to define a second groove 69. Similarly, the locking device of the receptacle includes a first protrusion 66 of which the cross-section widens radially outwardly towards a free end 68 thereof. The groove 69 corresponds in shape to the radially outer contour of the first protrusion 66, so that the two interlock, as shown in Fig. 30. Thus, there is provided a second pair of co-operating interlocking parts, this second pair being arranged within the rim 94.

A blind hole 88 is provided on a surface of the free end of the second protrusion 41 at a radially opposite location to the inlet opening 42 with respect to the second axis L₂. As can be seen in Fig. 29, the blind hole 88 projects slightly from the surface of the free end. This increases the force pressing an integrally formed inlet seal 44 against a sealing surface provided by the locking device of the receptacle.

The invention is not limited to the embodiment described above, which may be varied within the scope of the accompanying claims.

### LIST OF REFERENCE NUMERALS

- 10₁ - 10₆: receptacle
- 12: first locking device
- 14: drain opening
- 16: slot
- 17: drain seal
- 18: first shaped section
- 20: first groove
- 22: first abutment element
- 24: blocking element
- 26: first insertion opening
- 27: second insertion opening
- 28: first surface area
- 30: first straight section
- 32: second straight section
- 34: lug
- 36₁-36₁₀: cartridge
- 38: second locking device
- 40: second shaped section
- 41: second protrusion
- 42: inlet opening
- 44: inlet seal
- 46: second abutment element
- 48: first elevation
- 50: second elevation
- 52: indentation
- 56: uninterrupted elevation
- 58₁-58₄: apparatus
- 60: treatment means
- 62: outlet
- 64: second free end
- 66: first protrusion
- 68: first free end
- 69: second groove
- 70: rotary slider
- 72: slotted link guide
- 74: recess
- 75: straight region
- 76: pin
- 77: circular section
- 78: open end
- 80: closed end
- 82: inner end
- 84: inclination
- 86: closure element
- 88: blind hole
- 90: hinge
- 92: resilient section
- 93: snap-in hook
- 94: rim
- 96: outwardly directed part
- 98: inwardly
- 100: radially inwardly directed part
- E: plane
- L₁: first longitudinal axis
- L₂: second longitudinal axis
- T: axis of rotation

## Claims

1. Apparatus for treating a liquid, including:
- a receptacle (10) for collecting the liquid to be treated, the receptacle (10) including a first locking device (12) and a drain opening (14) for dispensing the liquid to be treated, and having a first axis (L₁); and
- a cartridge (36) for treating the liquid, releasably attachable to the receptacle (10), the cartridge (36) having a second axis (L₂) and including a second locking device (38) and an inlet opening (42) for leading the liquid to be treated into the cartridge (36), **characterised in that**
the first locking device (12) is provided with a first shaped section (18) and the second locking device (38) is provided with a second shaped section (40),
wherein the first shaped section (18) comprises a protrusion (66) with a free end (68) and the cross-section of the protrusion (66) widens toward the free end (68), and **in that**
the drain opening (14) and the inlet opening (42) can be made to register with each other and the second locking device (38) introduced into the first locking device (12) by placing the cartridge from a first position into a second position.

2. Apparatus according to claim 1, wherein
the first and second axes (L₁, L₂) are essentially parallel to each other during placement from the first into the second position, and
wherein the second locking device includes an insertion opening (27) by which, in the first position of the cartridge (36), the second locking device (38) is guidable into the first locking device (12) in an interlocking manner by a movement of the cartridge (36) directed essentially perpendicularly to the first axis (L₁) relative to the receptacle (10), and
wherein the cartridge (36) is placeable into the second position by rotation about the second axis (L₂).

3. Apparatus according to claim 1, wherein
the cartridge (36) is rotatable from the first into the second position by rotation about an axis of rotation (T) essentially perpendicular to at least one of the first and second axes (L1, L₂).

4. Apparatus according to claim 1, wherein
the first and second axes (L₁,L₂) are essentially parallel to each other during placement from the first into the second position, and
the cartridge (36) is placeable from the first into the second position by a movement directed along the first and second axes (L₁,L₂).

5. Apparatus according to any one of the preceding claims,
wherein the drain opening (40) is arranged outside the first shaped section (18).

6. Apparatus according to any one of claims 2 or 5, wherein the at least one insertion opening includes a first insertion opening (26) included in the first locking device (12), and
wherein the drain opening (14) is arranged behind the protrusion (66) of the first shaped section (18) with respect to the first insertion opening (26).

7. Apparatus according to any one of the preceding claims,
wherein the second shaped section (40) is provided with a second protrusion (41) having a second free end (64),
wherein the cross-section of the second protrusion (41) widens toward the second free end (64), and
wherein the first shaped section (18) is provided with a groove (20) corresponding to the second protrusion (41).

8. Apparatus according to claim 1,
wherein the second shaped section (40) is provided with a groove (69) corresponding to the protrusion (66) of the first shaped section (18).

9. Apparatus according to claim 7 or 8,
wherein at least one of the groove (20) of the first shaped section (18), the groove (69) of the second shaped section (40), the protrusion (66) of the first shaped section (18) and the second protrusion (41) is provided with an inclination (84) with respect to a plane (E) extending perpendicularly to at least one of the first and second axes (L₁,L₂).

10. Apparatus according to any one of the preceding claims,
further including an indentation (52) into which a lug (34) is insertable in the second position or rotary position of cartridge (36).

11. Receptacle for collecting a liquid to be treated, for use in an apparatus according to any one of claims 1-10, the receptacle including a first locking device (12) and a drain opening (14) for dispensing the liquid to be treated, and having a first axis (L₁),
wherein the receptacle is configured for releasable attachment of a cartridge (36) for treating the liquid having a second axis (L₂) and including a second locking device (38) and an inlet opening (42) for leading the liquid to be treated into the cartridge (36),
wherein the first locking device (12) is provided with a first shaped section (18),
wherein the first shaped section (18) comprises a protrusion (66) with a free end (68) and the cross-section of the protrusion (66) widens toward the free end (68), and
wherein the drain opening (14) can be made to register with the inlet opening (42) by placing the cartridge from a first position into a second position.

12. Cartridge for treating a liquid, for use in an apparatus according to any one of claims 1-10,
releasably attachable to a receptacle (10) for collecting the liquid to be treated, the receptacle (10) including a first locking device (12) and a drain opening (14) for dispensing the liquid to be treated, and having a first axis (L₁), the first locking device (12) being provided with a first shaped section (18) comprising a protrusion (66) with a free end (68), the cross-section of the protrusion (66) widening toward the free end (68),
wherein the cartridge (36) has a second axis (L₂) and includes a second locking device (38) and an inlet opening (42) for leading the liquid to be treated into the cartridge (36),
wherein the second locking device (38) is provided with a second shaped section (40),
wherein the second shaped section (40) is provided with a groove (69) corresponding to the protrusion (66) of the first shaped section (18), and
wherein the drain opening (14) and the inlet opening (42) can be made to register with each other by placing the cartridge from a first position into a second position.

13. Cartridge according to claim 12,
wherein the second locking device (38) is releasably attachable to the cartridge.

14. Method of releasably attaching a cartridge (36) for treating a liquid to a receptacle (10) for collecting the liquid to be treated, **characterised by** the following steps:
- providing an apparatus for treating a liquid according to any one of claims 1-10,
- introducing the second locking device (38) into the first locking device (12) by placing the cartridge from a first position into a second position in such a manner that the drain opening (14) and the inlet opening (42) register with each other.

## Patentansprüche

1. Vorrichtung zur Behandlung einer Flüssigkeit, aufweisend:
einen Behälter (10) zum Sammeln der zu behandelnden Flüssigkeit, wobei der Behälter (10) eine erste Verriegelungsvorrichtung (12) und einer Ablauföffnung (14) zum Ausgeben der zu behandelnden Flüssigkeit aufweist, und eine erste Achse (L₁) aufweist; und
eine Kartusche (36) zum Behandeln der Flüssigkeit, die lösbar an dem Behälter (10) befestigt ist, wobei die Kartusche (36) eine zweite Achse (L₂) aufweist und eine zweite Verriegelungsvorrichtung (38) und eine Einlassöffnung (42) zum Leiten der zu behandelnden Flüssigkeit in die Kartusche (36) aufweist, **dadurch gekennzeichnet, dass**
die erste Verriegelungsvorrichtung (12) mit einem ersten geformten Abschnitt (18) und die zweite Verriegelungsvorrichtung (38) mit einem zweiten geformten Abschnitt (40) bereitgestellt sind,
wobei der erste geformte Abschnitt (18) einen Vorsprung (66) mit einem freien Ende (68) umfasst und sich der Querschnitt des Vorsprungs (66) zum freien Ende (68) aufweitet, und dadurch, dass
die Ablauföffnung (14) und die Einlassöffnung (42) miteinander in Deckung gebracht und die zweite Verriegelungsvorrichtung (38) in die erste Verriegelungsvorrichtung (12) eingeführt werden kann, indem die Kartusche aus einer ersten Position in eine zweite Position positioniert wird.

2. Vorrichtung nach Anspruch 1, wobei
die erste und die zweite Achse (L₁, L₂) während der Positionierung aus der ersten in die zweite Position im Wesentlichen parallel zueinander verlaufen und
wobei die zweite Verriegelungsvorrichtung eine Einführöffnung (27) aufweist, durch die, in der ersten Position der Kartusche (36), die zweite Verriegelungsvorrichtung (38) in die erste Verriegelungsvorrichtung (12) auf zusammenfügende Weise durch eine Bewegung der Kartusche (36) eingeführt werden kann, die im Wesentlichen senkrecht zu der ersten Achse (L₁) in Bezug auf den Behälter (10) gerichtet ist und
wobei die Kartusche (36) durch Drehung um die zweite Achse (L₂) in die zweite Position positionierbar ist.

3. Vorrichtung nach Anspruch 1, wobei
die Kartusche (36) von der ersten in die zweite Position durch Drehen um eine Drehachse (T), die im Wesentlichen senkrecht zu mindestens einer der ersten und der zweiten Achse (L₁, L₂) verläuft, gedreht werden kann.

4. Vorrichtung nach Anspruch 1, wobei
die erste und die zweite Achse (L₁, L₂) während der Positionierung aus der ersten in die zweite Position im Wesentlichen parallel zueinander verlaufen und
die Kartusche (36) durch eine Bewegung, die entlang der ersten und der zweiten Achse (L₁, L₂) gerichtet ist, von der ersten in die zweite Position positionierbar ist.

5. Vorrichtung nach einem der vorhergehenden Ansprüche,
wobei die Abflauföffnung (40) außerhalb des ersten geformten Abschnitts (18) angeordnet ist.

6. Vorrichtung nach einem der Ansprüche 2 oder 5,
wobei die mindestens eine Einführöffnung eine erste Einführöffnung (26) umfasst, die in der ersten Verriegelungsvorrichtung (12) aufgenommen ist, und
wobei die Abflauföffnung (14) hinter dem Vorsprung (66) des ersten geformten Abschnitts (18) in Bezug auf die erste Einführöffnung (26) angeordnet ist.

7. Vorrichtung nach einem der vorhergehenden Ansprüche,
wobei der zweite geformte Abschnitt (40) mit einem zweiten Vorsprung (41) mit einem zweiten freien Ende (64) versehen ist,
wobei der Querschnitt des zweiten Vorsprungs (41) sich zum zweiten freien Ende (64) hin aufweitet und
wobei der erste geformte Abschnitt (18) mit einer Nut (20) versehen ist, die dem zweiten Vorsprung (41) entspricht.

8. Vorrichtung nach Anspruch 1,
wobei der zweite geformte Abschnitt (40) mit einer Nut (69) versehen ist, die dem Vorsprung (66) des ersten geformten Abschnitts (18) entspricht.

9. Vorrichtung nach einem der Ansprüche 7 oder 8,
wobei mindestens eines von der Nut (20) des ersten geformten Abschnitts (18), der Nut (69) des zweiten geformten Abschnitts (40), des Vorsprungs (66) des ersten geformten Abschnitts (18) und des zweiten Vorsprungs (41) mit einer Neigung (84) in Bezug auf eine sich senkrecht zu mindestens einer der ersten bzw. zweiten Achse (L1, L2) erstreckende Ebene (E) versehen ist.

10. Vorrichtung nach einem der vorhergehenden Ansprüche,
ferner aufweisend eine Vertiefung (52), in die ein Ansatz (34) in die zweite Position bzw. Drehposition der Kartusche (36) eingeführt werden kann.

11. Behälter zum Sammeln einer zu behandelnden Flüssigkeit für die Verwendung in einer Vorrichtung nach einem der Ansprüche 1 bis 10,
wobei der Behälter eine erste Verriegelungsvorrichtung (12) und eine Ablauföffnung (14) zum Ausgeben der zu behandelnden Flüssigkeit aufweist und eine erste Achse (L₁) aufweist,
wobei der Behälter zur lösbaren Befestigung einer Kartusche (36) zum Behandeln der Flüssigkeit konfiguriert ist und eine zweite Achse (L₂) aufweist und eine zweite Verriegelungsvorrichtung (38) und eine Einlassöffnung (42) zum Leiten der zu behandelnden Flüssigkeit in die Kartusche (36) aufweist,
wobei die erste Verriegelungsvorrichtung (12) mit einem ersten geformten Abschnitt (18) versehen ist,
wobei der erste geformte Abschnitt (18) einen Vorsprung (66) mit einem freien Ende (68) umfasst und sich der Querschnitt des Vorsprungs (66) zum freien Ende (68) aufweitet, und
wobei die Ablauföffnung (14) und die Einlassöffnung (42) durch Positionieren der Kartusche aus einer ersten Position in eine zweite Position miteinander in Deckung gebracht werden können.

12. Behälter zum Behandeln einer Flüssigkeit für die Verwendung in einer Vorrichtung nach einem der Ansprüche 1 bis 10,
die lösbar an einem Behälter (10) zum Sammeln der zu behandelnden Flüssigkeit befestigt werden kann, wobei der Behälter (10) eine erste Verriegelungsvorrichtung (12) und eine Ablauföffnung (14) zum Ausgeben der zu behandelnden Flüssigkeit aufweist und eine erste Achse (L₁) aufweist, wobei die erste Verriegelungsvorrichtung (12) mit einem ersten geformten Abschnitt (18), der einen Vorsprung (66) mit einem freien Ende (68) umfasst, versehen ist, wobei sich der Querschnitt des Vorsprungs (66) zum freien Ende (68) hin aufweitet,
wobei die Kartusche (36) eine zweite Achse (L₂) und eine zweite Verriegelungsvorrichtung (38) und eine Einlassöffnung (42) zum Leiten der zu behandelnden Flüssigkeit in die Kartusche (36) aufweist,
wobei die zweite Verriegelungsvorrichtung (38) mit einem zweiten geformten Abschnitt (40) versehen ist,
wobei der zweite geformte Abschnitt (40) mit einer Nut (69) versehen ist, die dem Vorsprung (66) des ersten geformten Abschnitts (18) entspricht, und
wobei die Ablauföffnung (14) und die Einlassöffnung (42) durch Positionieren der Kartusche aus einer ersten Position in eine zweite Position miteinander in Deckung gebracht werden können.

13. Kartusche nach Anspruch 12, wobei die zweite Verriegelungsvorrichtung (38) lösbar an der Kartusche befestigt werden kann.

14. Verfahren zum lösbaren Befestigen einer Kartusche (36) an einem Behälter (10) zum Behandeln einer Flüssigkeit zum Sammeln der zu behandelnden Flüssigkeit, **gekennzeichnet durch** die folgenden Schritte:
Bereitstellen einer Vorrichtung zum Behandeln einer Flüssigkeit nach einem der Ansprüche 1 bis 10,
Einführen der zweiten Verriegelungsvorrichtung (38) in die erste Verriegelungsvorrichtung (12), indem die Kartusche aus einer ersten Position in eine zweite Position gebracht wird, so dass die Ablauföffnung (14) und die Einlassöffnung (42) miteinander in Deckung stehen.

## Revendications

1. Appareil pour le traitement d'un liquide, incluant :
- un récipient (10) pour la collecte du liquide à traiter, le récipient (10) incluant un premier dispositif de verrouillage (12) et un orifice de vidage (14) pour distribuer le liquide à traiter, et ayant un premier axe (L₁) ; et
- une cartouche (36) pour le traitement du liquide, apte à être fixée de manière amovible au récipient (10), la cartouche (36) ayant un deuxième axe (L₂) et incluant un deuxième dispositif de verrouillage (38) et une ouverture d'admission (42) pour guider le liquide à traiter dans la cartouche (36), **caractérisé en ce que**
le premier dispositif de verrouillage (12) est pourvu d'une première section configurée (18), et le deuxième dispositif de verrouillage (38) est pourvu d'une deuxième section configurée (40),
où la première section configurée (18) comprend une saillie (66) avec une extrémité libre (68), et la section transversale de la saillie (66) s'élargit vers l'extrémité libre (68), et **en ce que**
l'orifice de vidage (14) et l'ouverture d'admission (42) peuvent être amenés à coïncider l'un avec l'autre, et le deuxième dispositif de verrouillage (38) introduit dans le premier dispositif de verrouillage (12) en plaçant la cartouche d'une première position dans une deuxième position.

2. Appareil selon la revendication 1, dans lequel
les premier et deuxième axes (L₁, L₂) sont essentiellement parallèles l'un à l'autre durant le placement de la première dans la deuxième position, et
où le deuxième dispositif de verrouillage inclut une ouverture d'insertion (27) par laquelle, dans la première position de la cartouche (36), le deuxième dispositif de verrouillage (38) peut être guidé dans le premier dispositif de verrouillage (12) d'une manière inter-verrouillée par un déplacement de la cartouche (36) dirigé essentiellement perpendiculairement au premier axe (L₁) relativement au récipient (10), et
où la cartouche (36) peut être placée dans la deuxième position par une rotation autour du deuxième axe (L₂).

3. Appareil selon la revendication 1, dans lequel
la cartouche (36) peut être amenée par rotation de la première dans la deuxième position par la rotation autour d'un axe de rotation (T) essentiellement perpendiculaire à au moins un des premier et deuxième axes (L₁, L₂).

4. Appareil selon la revendication 1, dans lequel
les premier et deuxième axes (L₁, L₂) sont essentiellement parallèles l'un à l'autre durant le placement de la première dans la deuxième position, et
la cartouche (36) peut être placée de la première dans la deuxième position par un déplacement dirigé le long des premier et deuxième axes (L₁, L₂).

5. Appareil selon l'une quelconque des revendications précédentes,
dans lequel l'orifice de vidage (40) est agencé à l'extérieur de la première section configurée (18).

6. Appareil selon l'une quelconque des revendications 2 ou 5,
dans lequel ladite au moins une ouverture d'insertion comprend une première ouverture d'insertion (26) incluse dans le premier dispositif de verrouillage (12), et
où l'orifice de vidage (14) est agencée derrière la saillie (66) de la première section configurée (18) relativement à la première ouverture d'insertion (26).

7. Appareil selon l'une quelconque des revendications précédentes,
dans lequel la deuxième section configurée (40) est pourvue d'une deuxième saillie (41) ayant une deuxième extrémité libre (64),
dans lequel la section transversale de la deuxième saillie (41) s'élargit vers la deuxième extrémité libre (64), et
dans lequel la première section configurée (18) est pourvue d'une rainure (20) correspondant à la deuxième saillie (41).

8. Appareil selon la revendication 1,
dans lequel la deuxième section configurée (40) est pourvue d'une rainure (69) correspondant à la saillie (66) de la première section configurée (18).

9. Appareil selon la revendication 7 ou 8,
dans lequel au moins une de la rainure (20) de la première section configurée (18), de la rainure (69) de la deuxième section configurée (40), de la saillie (66) de la première section configurée (18), et de la deuxième saillie (41) est pourvue d'une inclinaison (84) relativement à un plan (E) s'étendant perpendiculairement à au moins un des premier et deuxième axes (L₁, L₂).

10. Appareil selon l'une quelconque des revendications précédentes,
incluant en outre une encoche (52) dans laquelle un ergot (34) est insérable dans la deuxième position ou position de rotation de la cartouche (36).

11. Récipient pour la collecte d'un liquide à traiter, pour utilisation dans un appareil selon l'une quelconque des revendications 1 à 10, le récipient incluant un premier dispositif de verrouillage (12) et un orifice de vidage (14) pour distribuer le liquide à traiter, et ayant un premier axe (L₁),
où le récipient est configuré pour une fixation amovible d'une cartouche (36) pour le traitement du liquide ayant un deuxième axe (lu) et incluant un deuxième dispositif de verrouillage (38) et une ouverture d'admission (42) pour guider le liquide à traiter dans la cartouche (36),
où le premier dispositif de verrouillage (12) est pourvu d'une première section configurée (18),
où la première section configurée (18) comprend une saillie (66) avec une extrémité libre (68), et la section transversale de la saillie (66) s'élargit vers l'extrémité libre (68), et
où l'orifice de vidage (14) peut être amené à coïncider avec l'ouverture d'admission (42) en plaçant la cartouche d'une première position dans une deuxième position.

12. Cartouche pour le traitement d'un liquide, pour utilisation dans un appareil selon l'une quelconque des revendications 1 à 10,
apte à être fixée d'une manière amovible à un récipient (10) pour la collecte du liquide à traiter, le récipient (10) incluant un premier dispositif de verrouillage (12) et un orifice de vidage (14) pour la distribution du liquide à traiter, et ayant un premier axe (L₁), le premier dispositif de verrouillage (12) étant pourvu d'une première section configurée (18) comprenant une saillie (66) avec une extrémité libre (68), la section transversale de la saillie (66) s'élargissant vers l'extrémité libre (68),
où la cartouche (36) possède un deuxième axe (L₂) et comprend un deuxième dispositif de verrouillage (38) et une ouverture d'admission (42) pour guider le liquide à traiter dans la cartouche (36),
où le deuxième dispositif de verrouillage (38) est pourvu d'une deuxième section configurée (40),
où la deuxième section configurée (40) est pourvue d'une rainure (69) correspondant à la saillie (66) de la première section configurée (18), et
où l'orifice de vidage (14) et l'ouverture d'admission (42) peuvent être amenés à coïncider l'un avec l'autre en plaçant la cartouche d'une première position dans une deuxième position.

13. Cartouche selon la revendication 12,
dans laquelle le deuxième dispositif de verrouillage (38) est apte à être fixé de manière amovible à la cartouche.

14. Procédé pour fixer d'une manière amovible une cartouche (36) pour le traitement d'un liquide à un récipient (10) pour recueillir le liquide à traiter, **caractérisé par** les étapes suivantes :
- réaliser un appareil pour le traitement d'un liquide selon l'une quelconque des revendications 1 à 10,
- introduire le deuxième dispositif de verrouillage (38) dans le premier dispositif de verrouillage (12) en plaçant la cartouche d'une première position dans une deuxième position de telle manière que l'orifice de vidage (14) et l'ouverture d'admission (42) coïncident l'un avec l'autre.
